# EUROPEAN PATENT APPLICATION

(11) **EP 2 088 562 A1**
(43) Date of publication of application: **12.08.2009**
(21) Application number: 09250285.5
(22) Date of filing: 04.02.2009
(51) Int. Cl.: G07C 9/00

(54) **Control device, controlled device, and control method**

(30) Priority: 04.02.2008 JP 2008023922
(71) Applicant: Kabushiki Kaisha Toshiba, Minato-ku Tokyo (JP)
(72) Inventor: Sakamoto, Takafumi, Tokyo 105-8001 (JP); Mera, Keisuke, Tokyo 105-8001 (JP); Doi, Yusuke, Tokyo 105-8001 (JP); Umeda, Toshiyuki, Tokyo 105-8001 (JP); Otaka, Shoji, Tokyo 105-8001 (JP)
(74) Representative: Maury, Richard Philip

(57) **Abstract**

A control device communicating with a controlled device to control the controlled device includes a first memory to store first authentication information for activation of the controlled device, a second memory to store a key for encryption, a generator to generate third authentication information by encrypting second authentication information transmitted by the controlled device in response to the first authentication information using the key stored in the second memory, a transmitter to transmit the first authentication information or the third authentication information to the controlled device, and a memory controller to store the second authentication information or the third authentication information as first authentication information for next authentication in the first memory.

## Description

### CROSS-REFERENCE TO RELATED APPLICATIONS

This application is based upon and claims the benefit of priority from the prior Japanese Patent Application No. 2008-023922, filed on February 4, 2008; the entire contents of which are incorporated herein by reference.

### BACKGROUND OF THE INVENTION

### 1. FIELD OF THE INVENTION

The present invention relates to a control device, a controlled device, and a control method which use, for example, a weak radio wave to remotely control a controlled object.

### 2. DESCRIPTION OF THE RELATED ART

Remote control systems using weak radio signals are gaining popularity for door locks of motor vehicles, automatic doors of parking lots, and the like. Taking a door lock system of a motor vehicle as an example, a transmitter (control device) provided in a key holder of a car key emits a radio wave, which allows a controlled device in the motor vehicle that received the radio wave to release the door lock.

In such a remote control system, it is required to control only a specific controlled object, and hence it is necessary to exchange an identification signal such as an ID for example. However, when the ID is simply transmitted, it is possible that if the radio wave is intercepted and the ID is stolen, it allows a third person to control the controlled object in an unauthorized manner.

On the other hand, in the application of door lock of a motor vehicle or the like as mentioned above, the transmitter operated by the user needs to be made small. Further, the controlled device needs to be in an operation state at any time to be ready for operation by the user, which causes a problem of increasing power consumption. Thus, there is a problem in the conventional control device, controlled device and control method that there is a fear of allowing unauthorized control of the controlled object when the identification signal is intercepted. Further, while size reduction is required, there is also a problem of increasing the power consumption.

### SUMMARY OF THE INVENTION

The present invention is made to solve such problems, and an object thereof is to provide a control device, a controlled device, and a control method which are capable of preventing unauthorized control while achieving size reduction and decrease in power consumption.

To achieve the above-described object, a control device according to a first aspect of the present invention is a control device communicating with a controlled device to control the controlled device, including a first memory to store first authentication information for activation of the controlled device, a second memory to store a key for encryption, a generator to generate third authentication information by encrypting second authentication information transmitted by the controlled device in response to the first authentication information using the key stored in the second memory, a transmitter to transmit the first authentication information or the third authentication information to the controlled device, and a memory controller to store the second authentication information or the third authentication information as first authentication information for next authentication in the first memory.

A controlled device according to a second aspect of the present invention is a controlled device to authenticate a control device before performing control instructed from the control device, including a first memory to store first authentication information for identification of the control device, a first determination unit to generate random number information when second authentication information transmitted from the control device and the first authentication information stored in the first memory match, a transmitter to transmit the random number information to the control device, a second memory to store a key for encryption, a calculator to generating third authentication information by encrypting the random number information using the key stored in the second memory, a second determination unit to perform the control when response information sent from the control device and the third authentication information match, and a memory controller to store the random number information or the third authentication information as first authentication information for next authentication in the first memory.

A control method according to a third aspect of the present invention is a control method for a controlled device to authenticate a control device before performing control instructed fromthe control device, including: storing a key for encryption in a first memory, storing first authentication information for identification of the control device in a second memory, generating random number information at a first determination unit when second authentication information sent from the control device and the first authentication information stored in the second memory match, transmitting the random number information to the control device, generating third authentication information at a calculator by encrypting the random number information using the key stored in the first memory, performing the control at a second determination unit when response information sent from the control device and the third authentication information match, and storing the random number information or the third authentication information as second authentication information for next authentication in the second memory.

### BRIEF DESCRIPTION OF THE DRAWINGS

FIG. 1 is a block diagram showing the structure of a control system according to a first embodiment of the present invention.

FIG. 2 is a diagram showing an operation sequence of the control system according to the first embodiment.

FIG. 3 is a block diagram showing the structure of a control system according to the first embodiment.

FIG. 4 is a flowchart showing operation of a control device according to the first embodiment.

FIG. 5 is a flowchart showing operation of a lock driving device according to the first embodiment.

FIG. 6 is a block diagram showing the structure of a control system according to a second embodiment of the present invention.

FIG. 7 is a flowchart showing operation of a control device according to the second embodiment.

FIG. 8 is a flowchart showing operation of a lock driving device according to the second embodiment.

FIG. 9 is a block diagram showing the structure of a control system according to a third embodiment of the present invention.

FIG. 10 is a flowchart showing an operation of a lock driving device according to the third embodiment.

FIG. 11 is a block diagram showing the structure of a control system according to a fourth embodiment of the present invention.

FIG. 12 is a flowchart showing operation of a lock driving device according to the fourth embodiment.

FIG. 13 is a diagram showing a structural example of a detection unit in the lock driving devices according to the first to fourth embodiments of the present invention.

### DESCRIPTION OF THE EMBODIMENTS

In embodiments of the present invention, plural times of authentication and control of power supply are made possible by a simple method between a driving device (controlled device) controlling a controlled object and a control device transmitting an instruction by the user to the driving device. Hereinafter, embodiments of the present invention will be explained in detail with reference to the drawings, taking an example of the case of remotely controlling a door lock of a motor vehicle.

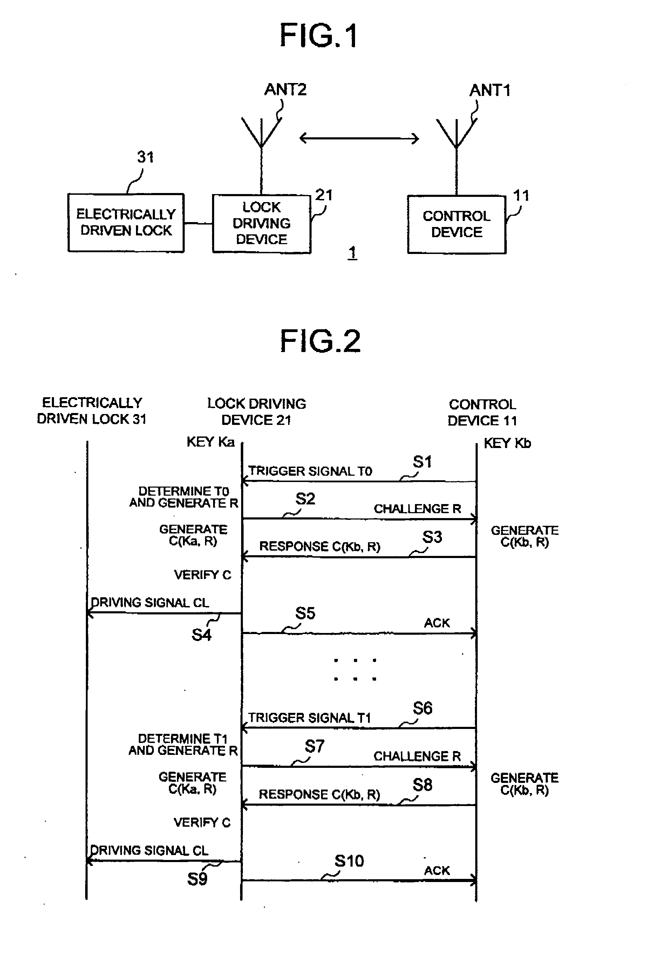

As shown in FIG. 1, the control system of this embodiment includes a control device 11 emitting a control signal by the user, and a lock driving device 21 as a controlled device which receives a radio wave from the control device 11, authenticates a control signal from the control device 11, and transmits a driving signal to an electrically driven lock 31 as a controlled object.

The control device 11 is a transmitter attached to a key of a motor vehicle or the like, and has a function to generate a control signal based on an instruction by the user and transmit the signal to the lock driving device 21. More specifically, the control device 11 has a function to transmit a trigger signal controlling power supply of the lock driving device 21 and a response signal responding to a challenge signal for authentication transmitted from the lock driving device 21. The lock driving device 21 has a function to control its own power supply by the trigger signal received from the control device 11, a function to transmit a challenge signal to the control device 11 upon reception of the trigger signal, a function to receive the response signal emitted by the control device in response to the challenge signal and authenticate whether it is from a correct control device or not, and a function to generate a driving signal when it is authenticated as a correct control signal. The electrically driven lock 31 is a door lock mechanism of a motor vehicle for example, and realizes a predetermined operation such as releasing of the door lock based on the driving signal sent from the lock driving device 21.

Next, operation of the control system according to the first embodiment will be explained in detail with reference to FIG. 2. In this embodiment, common key codes Ka and Kb and an initial value T0 of the trigger signal controlling power supply of the lock driving device 21 are assigned in advance to the lock driving device 21 and the control device 11 and are stored in storage units provided respectively in these devices.

As shown in FIG. 2, when the user emits an instruction by a not-shown switch or the like, the control device 11 transmits the trigger signal T0 having the initial value to the lock driving device 21 (step 1, hereinafter referred to as "S1"). Upon reception of the trigger signal T0, the lock driving device 21 determines whether the trigger signal is a correct one or not. When it is correct, the lock driving device turns on its main power and generates random data R (hereinafter referred to as "random number R"). The lock driving device 21 transmits the generated random number R as the challenge signal to the control device 11 (S2). At this time, the lock driving device 21 generates encryption data C (Ka, R) (hereinafter referred to as "calculated value C(Ka, R)") using the random number R and the key Ka stored in itself.

Upon reception of the randomnumber R as the challenge signal, the control device 11 generates a calculated value C(Kb, R) using the received random number R and the key Rb stored in itself, and transmits the value as the response signal to the lock driving device 21 (S3). A common calculation is used for the calculation performed by the control device 11 and the calculation performed by the lock driving device 21. Therefore, when the keys are in common and objects of calculation are in common, the same results can be obtained.

Upon reception of the calculated value C(Kb, R) as the response signal, the lock driving device 21 compares the calculated value C(Ka, R) generated by itself with the received calculated value C(Kb, R). As described above, when the key Kb stored in advance in the control device 11 and the key Ka stored similarly in the lock driving device 21 are common ones, and when the same random number R is calculated using either of them, the calculated value C becomes the same. As a result of the comparison, when the respective calculated values C are the same, the lock driving device 21 authenticates that the control device 11 is a correct opponent, and generates a driving signal CL and sends it to the electrically driven lock 31 (S4). At this time, the lock driving device 21 may return a acknowledgment signal ACK to the control device 11 (S5). Upon reception of the driving signal CL, the electrically driven lock 31 performs a predetermined operation.

Thereafter, when the user emits an instruction via a not-shown switch or the like, the control device 11 transmits data generated in the previous sequence (S1 to S5) as the trigger signal T1 to the lock driving device 21 (S6). As the data generated in the previous sequence, for example, the random number R received by the control device 11 as the challenge signal, the calculated value C(Kb, R) generated based on the random number R, or the like can be used.

Upon reception of the trigger signal T1, the lock driving device 21 determines whether the trigger signal T1 is a correct one or not. When it is correct, the lock driving device turns on its main power and generates a random number R, and transmits the generated random number R as the challenge signal to the control device 11 (S7). Similarly to the previous sequence, the lock driving device 21 generates a calculated value C(Ka, R) using the new random number R and the key Ka stored in itself.

Thereafter, similarly, the control device 11 that received the challenge signal generates a calculated value C(Kb, R) using a new random number R and the encryption key Kb, and transmits the value as the response signal to the lock driving device 21 (S8). The lock driving device 21 compares the calculated value C(Ka, R) generated by itself with the received calculated value C(Kb, R). When they are the same, the lock driving device generates a driving signal CL and sends it to the electrically driven lock 31 (S9), and returns the ACK to the control device 11 (S10).

In this manner, in the control system of this embodiment, since data generated in the previous sequence are transmitted and received as the next trigger signal, it is possible to perform double authentication in addition to the authentication using the keys Ka, Kb. Particularly, in the control system of this embodiment, the main power supply is controlled based on the trigger signal, and thus possibilities of causing malfunction and power consumption due to an unwanted radio wave can be suppressed. Note that in this embodiment, the trigger signal is changed in every control operation, but this is not limited thus. An inherent identification signal may be included in the trigger signal so as to add data obtained in the previous sequence additionally. In this case, three times of authentication in total can be realized, and moreover, even when data obtained in the previous sequence are lost for some kind of failure, the next sequence can be recovered using the identification signal.

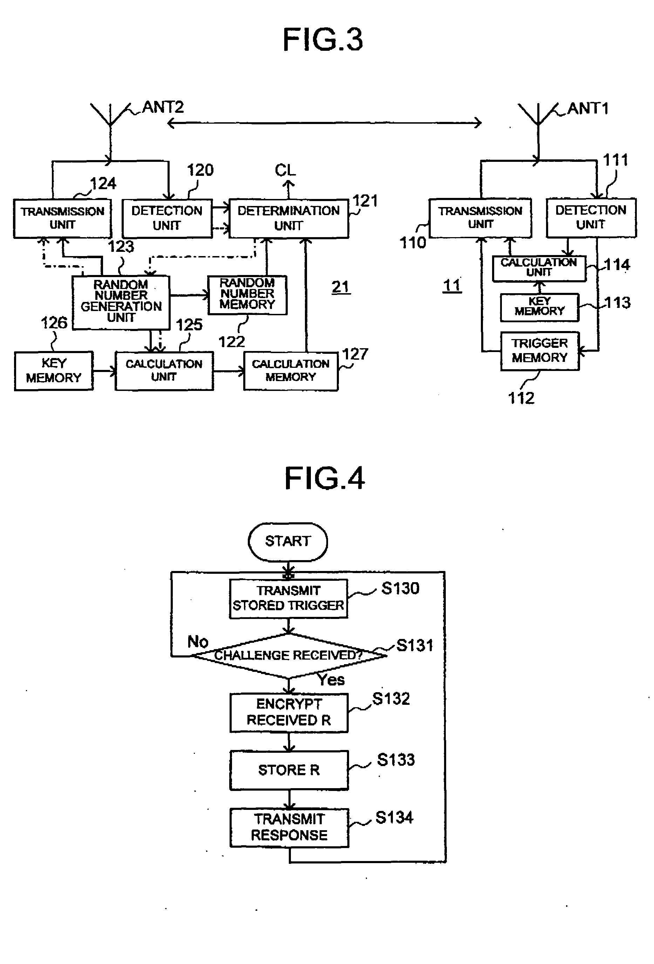

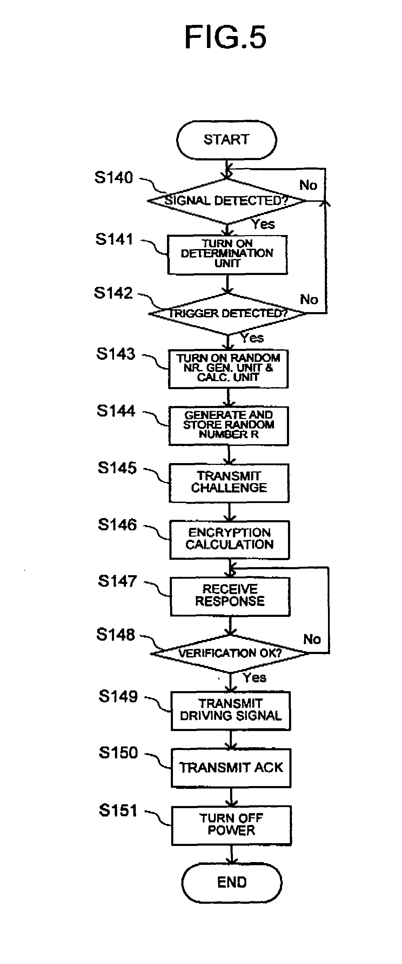

Next, using FIG. 3 to FIG. 5, the control device 11 and the lock driving device 21 according to the control system of this embodiment will be explained in detail. As shown in FIG. 3, the control device 11 of this embodiment includes an antenna ANT1, a transmission unit 110, a detection unit 111, a trigger memory 112, a key memory 113, and a calculation unit 114. The control device 11 operates normally by a secondary battery such as an electric cell, and is fitted in a key of a motor vehicle for example.

The antenna ANT1 is used by the control device 11 to communicate with the lock driving device 21. The transmission unit 110 has a local signal oscillator, a modulator, an amplifier, and so on, and transmits a random number R as the trigger signal or a calculated value C as the response signal to the lock driving device 21 using a radio wave having a predetermined frequency. As the modulator of the transmission unit 110, one having a simple structure such as amplitude modulation for example is used. To suppress power consumption, power supply to the elements forming the transmission unit 110 may be stopped except when transmission is performed.

The detection unit 111 has a demodulator and so on, and demodulates a signal from the lock driving device 21 received via the antenna ANT1. In this embodiment, an amplitude-basedmodulation signal is transmitted, and hence a relatively simple modulation method such as diode detection can be adopted. The detection unit 111 also has a function to store a received challenge signal in the trigger memory 112.

The trigger memory 112 is a rewritable memory storing an identification signal which identifies the control device 11, a trigger signal which activates the lock driving device 21, and the like. In the sequence example shown in FIG. 2, an identification signal is stored as an initial value of the trigger signal, and thereafter the random number R that is the challenge signal is stored as the next trigger signal. However, it may be a form such that the identification signal is always stored and only the challenge signal is rewritten.

The key memory 113 is a non-volatile memory storing the encryption key Kb for generating the calculated value C (Kb, R). The calculation unit 114 performs calculation processing (encryption) of the random number R sent from the lock driving device 21 using the encryption key Kb stored in the key memory 113 to generate the calculated value C (Rb, R).

Hereinafter, with reference to FIG. 2 and FIG. 4, operation of the control device 11 of this embodiment will be explained.

When the user performs an instruction operation by a not-shown switch or the like, the transmission unit 110 reads initial value data of the trigger signal from the trigger memory 112 and modulates them, and transmits the trigger signal T0 via the antenna ANT1 (S130). As shown in FIG. 2, the lock driving device 21 authenticates the trigger signal T0 and transmits a random number R as the challenge signal to the control device 11.

Upon detection of a radio wave having a predetermined frequency, the detection unit 111 demodulates the received radio wave and sends it to the calculation unit 114. Here, it may be a structure such that the detection unit 111 determines whether the demodulated received signal is the challenge signal of the lock driving device 21 or not, and when it is not the challenge signal, the transmission unit 110 retransmits the trigger signal. Alternatively, it may be a structure such that the entire control device 11 turns to a standby state when the detection unit 111 does not receive the correct challenge signal after a certain time has passed (No in S131). Upon reception of the challenge signal, namely, the random number R, the calculation unit 114 reads the key Kb from the key memory 113 to perform predetermined calculation processing (encryption) to generate a calculated value C(Kb, R) (S132). That is, when the challenge signal is the random number R, the random number R is then encrypted by the key Kb. At the same time, the detection unit 111 stores the random number R as the challenge signal in the trigger memory 112 (S133).

The transmission unit 110 receives the calculated value C(Kb, R) from the calculation unit 114, performs predetermined modulation thereon, and transmits a modulated signal as the response signal via the antenna ANT1 (S134). When the lock driving device 21 succeeds in verification of the response signal, a predetermined control operation is performed. In addition, it may be structured to receive the ACK signal returned by the lock driving device 21 and inform the user of the operation status via a not-shown display device.

In the next operation and thereafter, instead of the trigger signal T0, the transmission unit 110 transmits the challenge signal (random number R) stored in the trigger memory 112 in step S133 as the trigger signal T1 (S130). Thereafter, the transmission unit 110 reads the random number R received and stored in the previous sequence from the trigger memory 112, and transmits the random number R as the trigger signal T to the lock driving device 21.

In this manner, according to the control device of this embodiment, since the random number R received in the previous sequence is used as the next trigger signal T, a possibility of unauthorized control can be reduced even if the trigger signal is intercepted.

Next, the lock driving device 21 will be explained. As shown in FIG. 3, the lock driving device 21 according to this embodiment includes a detection unit 120, a determination unit 121, a random number memory 122, a randomnumber generation unit 123, a transmission unit 124, a calculation unit 125, a key memory 126, and a calculation memory 127.

The detection unit 120 has a demodulator and so on similarly to the detection unit 111, and demodulates a signal from the control device 11 received via an antenna ANT2. In addition to the function as a demodulator to demodulate a received signal, the detection unit 120 also has a function to detect a radio wave and control power supply to the determination unit 121. Specifically, when the detection unit 120 detects a radio wave, the detection unit supplies power to the determination unit 121 (dashed line in the diagram), and sends a demodulated signal to the determination unit 121. Consequently, it becomes possible that the power is supplied only to the detection unit 120 until a radio wave is detected, which allows to suppress power consumption of the entire lock driving device 21. In the control system of this embodiment, an amplitude modulation based method is used as the modulation method, and hence there is used a detection method such as to convert a received signal into a direct current, such as diode detection.

The determination unit 121 determines whether the trigger signal or the response signal demodulated by the detection unit 120 is from the correct control device 11 or not. Specifically, the determination unit 121 reads data (random number R generated in the previous sequence or initial value of the trigger signal) stored in the random number memory 122, and compares the data with the demodulated trigger signal to determine whether they match or not. When they match as a result of the comparison, the determination unit 121 supplies power to the random number generation unit 123, the transmission unit 124 and the calculation unit 125 (chain-dashed line in the diagram). Specifically, in this embodiment, there is realized power control in two steps, the power control by presence of a radio wave detected by the detection unit 120 and the power control by correctness of the trigger signal by the determination unit 121. Accordingly, it is possible to suppress power consumption as the whole as well as unwanted power consumption due to detection of an unintended radio wave or unauthorized transmission of a radio wave by a third person.

Further, the determination unit 121 compares a response signal (calculated value C) transmitted from the control device 11 with a calculated value read from the memory 127, which will be described later, to determine whether they match or not. When they match, the determination unit 121 generates the driving signal CL that controls the electrically driven lock 31. Specifically, the determination unit 121 generates the driving signal CL when both the trigger signal and the response signal are correct. Accordingly, double authentication is realized for control of the lock driving device as the controlled object.

The random number generation unit 123 activated upon reception of power from the determination unit 121 has a function to generate a random number R as random number data having a predetermined length, store it in the random number memory 122, and send it to the transmission unit 124 and the calculation unit 125. Specifically, the random number generation unit 123 generates a random number R used for transmission of the challenge signal to the control device 11 or calculation (encryption) by the calculation unit 125, and stores the number in the random number memory 122.

The transmission unit 124 corresponds to the detection unit 111, performs predetermined demodulation on the random number R generated by the random number generation unit 123 and transmits it via the ANT2. The detection unit 111 of the control device 11 is made to have a simple structure for demands of size reduction and decrease in power consumption, and thus simple, amplitude modulation based one is selected also for modulation by the transmission unit 124.

The calculation unit 125 performs calculation processing (encryption processing) using the key Ka read from the key memory 126 with respect to the random number R generated by the random number generation unit 123. The calculation unit 125 corresponds to the calculation unit 114 and performs calculation processing by a common calculation formula- Therefore, when the random number R and the keys Ka and Kb, which are objects of calculation, are in common, the calculation units 114 and 126 generates a same calculated value C. The calculation unit 125, when it performs the calculation processing, stores the obtained calculated value C in the calculation memory 127.

Hereinafter, operation of the lock driving device 21 of this embodiment will be explained with reference to FIG. 2, FIG. 3 and FIG. 5.

The detection unit 120 is constantly supplied with power to detect a radio wave (No in S140). Upon detection of a radio wave (Yes in S140), the detection unit 120 supplies power to the determination unit 121 to turn it to an on state, and demodulates the received signal and sends it to the determination unit 121 (S141).

The determination unit 121 is activated upon supply of power, and determines whether the signal received from the detection unit 120 matches with an initial value T0 of the trigger signal (or the random number R used in the previous sequence) (S142). When they do not match (No in S142), the determination unit 121 ends the processing, and the detection unit 120 turns off the power supply to the determination unit 121. when they match (Yes in S142), the determination unit 121 starts supplying power to the random number generation unit 123, the transmission unit 124 and the calculation unit 125 (S143). Consequently, the random number generation unit 123 generates a random number R and stores it in the random number memory 122 (S144).

When the random number R is generated, the transmission unit 124 performs predetermined modulation on the random number R and transmits it as the challenge signal to the control device 11 via the antenna ANT2 (S145). On the other hand, the calculation unit 125 reads the key Ka from the key memory 126, performs calculation processing (encryption) on the random number R based on the key Ka, and stores the obtained calculated value C(Ra, R) in the calculation memory 127 (S146).

When the detection unit 120 receives a response signal from the control device 11 (S147), the determination unit 121 compares the calculated value C (Kb, R) as the response signal with the calculated value C (Ka, R) stored in the calculation memory 127 (S148). When they are not the same as a result of the comparison (No in S148), the detection unit 120 continues to receive a radio wave, and the determination unit 121 turns to a standby state for receiving the response signal including a calculated value C. when they are the same as a result of the comparison (Yes in S148), the determination unit 121 generates a driving signal CL and transmits it to the electrically driven lock (S149). At the same time, the determination unit 121 may transmit an ACK signal to the control device 11 via the transmission unit 124 (S150). When transmission of the driving signal CL is completed, the determination unit 121 stops supplying power to the random number generation unit 123, the transmission unit 124 and the calculation unit 125, and turns off its own power as well (S151).

Thus, with the lock driving device 21 of this embodiment, since the trigger signal from the control device 11 is correct or not is determined, authentication can be doubled. Further, in the lock driving device 21 of this embodiment, since power supply to other circuit elements is controllable based on correctness of the trigger signal, malfunction due to an unwanted radio wave or unauthorized radio wave from the outside can be prevented, and the power consumption can be suppressed.

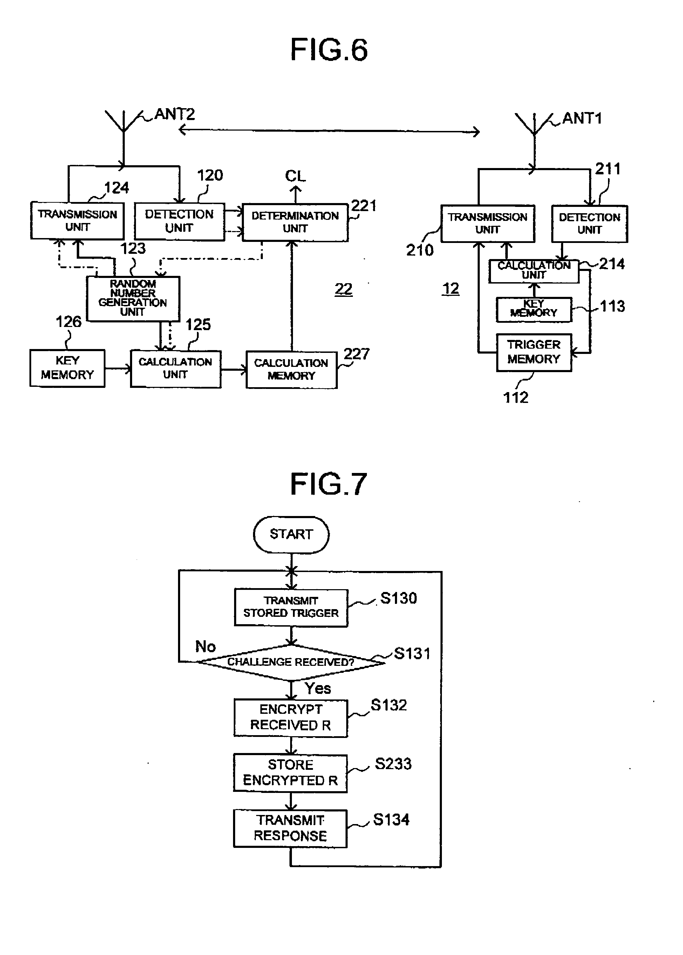

Next, with reference to FIG. 6 to FIG. 8, a control system according to a second embodiment of the present invention will be explained in detail. In the following explanation, structures and steps common to the first embodiment are given the same reference numerals, and duplicating explanations are omitted.

As shown in FIG. 6, a control device 12 of this embodiment includes an antenna ANT1, a transmission unit 210, a detection unit 211, a trigger memory 112, a key memory 113, and a calculation unit 214. That is, the control device 12 of this embodiment is different from the first embodiment in that it uses not the random number R but the calculated value C as the trigger signal from the control device to the lock driving device.

The transmission unit 210 corresponds to the transmission unit 110 according to the first embodiment. The transmission unit 210 is different from the transmission unit 110 according to the first embodiment in that it uses the calculated value C as the trigger signal.

The detection unit 211 corresponds to the detection unit 111 according to the first embodiment. The detection unit 211 is different from the detection unit 111 according to the first embodiment in that it does not have the function to store a received challenge signal as the next trigger signal in the trigger memory 112.

The calculation unit 214 performs calculation processing (encryption) of the random number R sent from a lock driving device 22 using an encryption key Kb stored in the key memory 113 so as to generate a calculated value C (Kb, R). At the same time, the calculation unit 214 has a function to store the generated calculated value C in the trigger memory 112 to use this value as the trigger signal in the next sequence. The trigger memory 112 is common to the trigger memory 112 in the first embodiment, and in this embodiment, it stores an identification signal or the like as an initial value of the trigger signal, and thereafter stores the calculated value C calculated by the calculation unit 214 as the next trigger signal.

Hereinafter, operation of the control device 12 of this embodiment will be explained with reference to FIG. 6 and FIG. 7. The following explanation will be given focusing on differences from the first embodiment.

When the user performs an instruction operation by a not-shown switch or the like, the transmission unit 210 reads data forming the initial value of the trigger signal from the trigger memory 112 and modulates them, and transmits the trigger signal T0 via the antenna ANT1 (S130). Also in this embodiment, the lockdriving device 22 authenticates the trigger signal T0 and replies to the control device 12 with a random number R as the challenge signal.

Upon detection of a radio wave having a predetermined frequency, the detection unit 211 demodulates the received radio wave and sends it to the calculation unit 214. A point that the detection unit 211 may perform determination of the challenge signal is similar to the first embodiment (No in S131). Upon reception of the random number R as the challenge signal, the calculation unit 214 reads the key Kb from the key memory 113 and performs predetermined calculation processing (encryption) thereon to generate a calculated value C (Kb, R) (S132). At the same time, the calculation unit 214 stores the calculated value C (Kb, R) obtained by encrypting the random number R in the trigger memory 112 (S233).

The transmission unit 110 receives the calculated value C(Kb, R) from the calculation unit 214, performs predetermined modulation thereon, and transmits a modulated signal as the response signal via the antenna ANT1 (S134). When the lock driving device 22 succeeds in verification of the response signal, a predetermined control operation is performed.

In the next operation and thereafter, instead of the trigger signal T0, the transmission unit 210 transmits the calculated value C (Kb, R) stored in the trigger memory 112 as the trigger signal T1. Thereafter, the transmission unit 210 reads the calculated value C generated and stored in the previous sequence from the trigger memory 112, and transmits the calculated value C as the trigger signal T to the lock driving device 22.

In this manner, according to the control device of this embodiment, since the calculated value C generated in the previous sequence is used as the next trigger signal T, a possibility of unauthorized control can be reduced even if the trigger signal is intercepted.

Next, the lock driving device 22 will be explained. As shown in FIG . 6 , the lock driving device 2 2 according to this embodiment includes a detection unit 120, a determination unit 221, a random number generation unit 123, a transmission unit 124, a calculation unit 125, a key memory 126, and a calculation memory 227. In the lock driving device 22 of this embodiment, the calculated value C generated in the previous sequence is used as the trigger signal for authentication of the corresponding control device 12 and power supply to each part of the lock driving device 22.

The determination unit 221 determines whether the trigger signal or the response signal demodulated by the detection unit 120 is from the correct control device 12 or not. Specifically, the determinationunit 221 reads data (calculated valueC(Ka, R) generated in the previous sequence or initial value of the trigger signal) stored in the calculation memory 227, and compares the data with the demodulated trigger signal to determine whether they match or not. When they match, the determination unit 221 supplies power to the random number generation unit 123, the transmission unit 124 and the calculation unit 125. Similarly to the first embodiment, there is realized also in the second embodiment power control in two steps, the power control by presence of a detected radio wave and the power control by correctness of the trigger signal. Thus, suppression of power consumption, suppression of unwanted power consumption in particular, can be achieved.

Further, the determination unit 221 has a function to compare the response signal (calculated value C) sent from the control device 12 with a calculated value read from the calculation memory 227, which will be described later, to determine whether they match or not. This function is common to the determination unit 121 of the first embodiment.

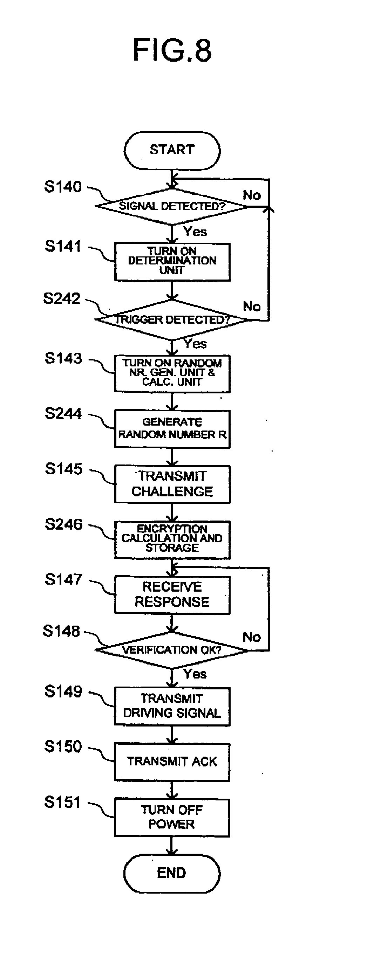

Hereinafter, with reference to FIG. 6 and FIG. 8, operation of the lock driving device 22 of this embodiment will be explained.

The detection unit 120 is constantly supplied with power to detect a radio wave (No in S140). Upon detection of a radio wave (Yes in S140), the detection unit 120 supplies power to the determination unit 221 to turn it to an on state, and sends the received signal to the determination unit 221 (S141).

The determination unit 221 is activated upon supply of power, and determines whether the received signal matches with an initial value T0 of the trigger signal (or the calculated value C used in the previous sequence) (S242). When they do not match (No in S242), the determination unit 221 ends the processing, and the detection unit 120 turns off the power supply to the determination unit 221. When they match (Yes in S242), the determination unit 221 starts supplying power to the random number generation unit 123, the transmission unit 124 and the calculation unit 125 (S143). Consequently, the random number generation unit 123 generates a random number R and sends it to the transmission unit 124 (S244).

When the random number R is generated, the transmission unit 124 performs predetermined modulation on the random number R and transmits it as the challenge signal to the control device 12 via the antenna ANT2 (S145). On the other hand, the calculation unit 125 reads the key Ka fromthe key memory 126, performs calculation processing on the random number R based on the key Ka, and stores the obtained calculated value C(Ka, R) in the calculation memory 227 (S246).

When the detection unit 120 receives a response signal from the control device 12 (S147), the determination unit 221 compares the calculated value C(Kb, R) as the response signal with the calculated value C (Ka, R) stored in the calculation memory 127 (S148) When they are not the same as a result of the comparison (No in S148), the detection unit 120 continues to receive a radio wave, and the determination unit 221 turns to a standby state for receiving a calculated value. When they are the same as a result of the comparison (Yes in S148), the determination unit 221 generates a driving signal CL and sends it to the electrically driven lock (S149). At the same time, the determination unit 221 may transmit an ACK signal to the control device 12 via the transmission unit 124 (S150). When transmission of the driving signal CL is completed, the determination unit 221 stops supplying power to the random number generation unit 123, the transmission unit 124 and the calculation unit 125, and turns off its own power as well (S151).

Thus, with the lock driving device 22 of this embodiment, since the trigger signal from the control device 12 is correct or not is determined, authentication can be doubled. Further, in the lock driving device 22 of this embodiment, since power supply to other circuit elements is controllable based on correctness of the trigger signal, malfunction due to an unwanted radio wave or unauthorized radio wave from the outside can be prevented, and the power consumption can be suppressed. Particularly, in the control device of this embodiment, since the calculated value C is used both as the trigger signal and the response signal, it is not necessary to prepare a memory area for the random number R, and thus the circuit structure can be simplified further.

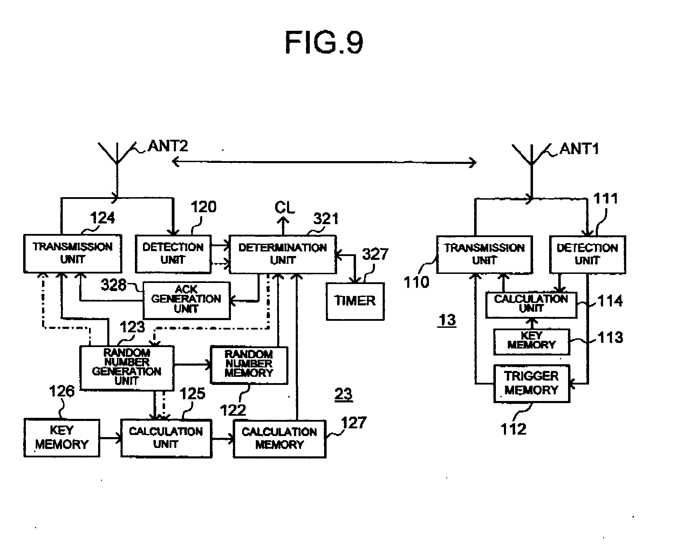

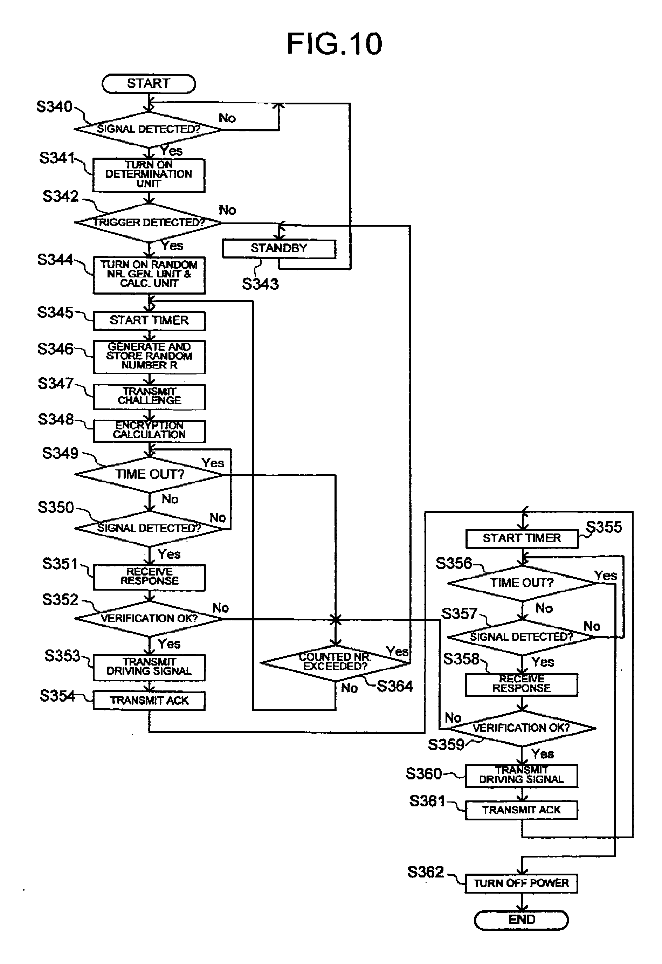

Next, with reference to FIG. 9 and FIG. 10, a control system according to a third embodiment of the present invention will be explained in detail. In the following explanation, structures and steps common to the first and second embodiments are given the same reference numerals, and duplicating explanations are omitted. As shown in FIG. 9, the control system of this embodiment is such that a timer 327 and an ACK generation unit 328 are further provided in the key driving device of the first embodiment so as to realize timed control. A control device 13 of this embodiment has the same structure and operates in the same manner as the control device 11 of the first embodiment. Hereinafter, a lock driving device 23 of this embodiment will be explained in detail.

The timer 327 is a time keeping device giving time information to a determination unit 321. The timer 327 defines the time or the like when the determination unit 321 receives a trigger signal or a response signal, and gives the determination unit 321 a timing to time out. The ACK generation unit 328 generates an ACK signal (acknowledgement signal or control confirmation signal) to be transmitted to the control device 13.

Hereinafter, with reference to FIG. 9 and FIG. 10, operation of the lock driving device 23 of this embodiment will be explained.

The detection unit 120 is constantly supplied with power to detect a radio wave (No in S340). Upon detection of a radio wave (Yes in S340), the detection unit 120 supplies power to the determination unit 321 to turn it to an on state, and demodulates the received signal and sends it to the determination unit 321 (S341).

The determination unit 321 is activated upon supply of power, and determines whether the signal received from the detection unit 120 matches with an initial value T0 of the trigger signal (or the random number R used in the previous sequence) (S342). When they do not match (No in S342), the determination unit 321 ends the processing, and the detection unit 120 turns off the power supply to the determination unit 321 and turns to a standby state (S343). When they match (Yes in S342), the determination unit 321 starts supplying power to the random number generation unit 123, the transmission unit 124, the calculation unit 125 and the timer 327 (S344).

When the power is supplied to the timer 327, the timer 327 starts counting of a predetermined time (S345). The random number generation unit 123 generates a random number R and stores it in the random number memory 122 (S346).

When the random number R is generated, the transmission unit 124 performs predetermined modulation on the random number R and transmits it as the challenge signal to the control device 11 via the antenna ANT2 (S347). On the other hand, the calculation unit 125 reads the key Ka fromthe key memory 126, performs calculation processing on the random number R based on the key Ka, and stores the obtained calculated value C (Ka, R) in the calculation memory 127 (S348).

Here, when a count value given by the timer 327 is not larger than a value of time limit (No in S349) and a radio wave arrives from the control device 13 (Yes in S350), the detection unit 120 receives the radio wave and sends it to the determination unit 321 (S351). The determination unit 321 compares the received response signal (calculated value C (Kb, R)) with the calculated value C(Ka, R) stored in the calculation memory 127 (S352).

When both the calculated values C match as a result of the comparison (Yes in S352), the determination unit 321 generates a driving signal CL and sends it to the electrically driven lock (S353). At the same time, the determination unit 321 instructs the ACK generation unit 328 to generate an ACK signal, and the ACK generation unit 328 transmits the ACK signal to the control device 13 via the transmission unit 124 (S354).

Upon transmission of the ACK signal, the determination unit 321 resets the timer 327 and starts counting of a predetermined time anew (S355). This counting corresponds to the case where the control device 13 cannot receive the ACK and retransmits the response signal. When a count value given by the timer 327 is not larger than a value of time limit (No in S356) and a radio wave arrives from the control device 13 (Yes in S350), the detection unit 120 receives the radio wave and sends it to the determination unit 321 (S358). The determination unit 321 compares the received response signal with the calculated value C stored in the calculation memory 127 (S359).

When the both calculated values C match as a result of the comparison (Yes in S359), the determination unit 321 generates the driving signal CL again and sends it to the electrically driven lock (S360). At the same time, the determination unit 321 instructs the ACK generation unit 328 to generate the ACK again, and the ACK generation unit 328 transmits the ACK signal to the control device 13 via the transmission unit 124 (S361). Thereafter, until the control device 13 receives the ACK signal correctly and transmission of the response signal stops, the operation of step 355 to step 361 is repeated appropriately. When there is no response signal received even when the predetermined time passes, it is assumed that the control device 13 has confirmed the ACK signal correctly, and the processing is ended and the power is turned off (S362). Thus, when the control device 13 fails to receive the ACK signal and transmits the response signal again, the control operation can be performed securely and the ACK signal can be retransmitted.

Note that when reception of the response signal is failed within the predetermined time in steps 349, 352, 359 (Yes in S349, No in S352, and No in S359), the timer 327 counts the number of failures (S364), and when it is less than a predetermined number (No in S364), the determination unit 321 starts over the processing from the transmission of the challenge signal. When reception of the response signal is failed even when the predetermined number is reached (Yes in S364), the timer 327 resets counting of the time and counting of the number of times, and the determination unit 321 stops supplying power and turns to a standby state (S343).

Thus, according to the lock driving device 23 of this embodiment, since the numbers of receptions of the response signal and transmissions of the challenge signal are controlled by the timer 327, more appropriate reduction of power consumption can be achieved. Further, since resetting occurs after a predetermined time passes, safety is increased as well.

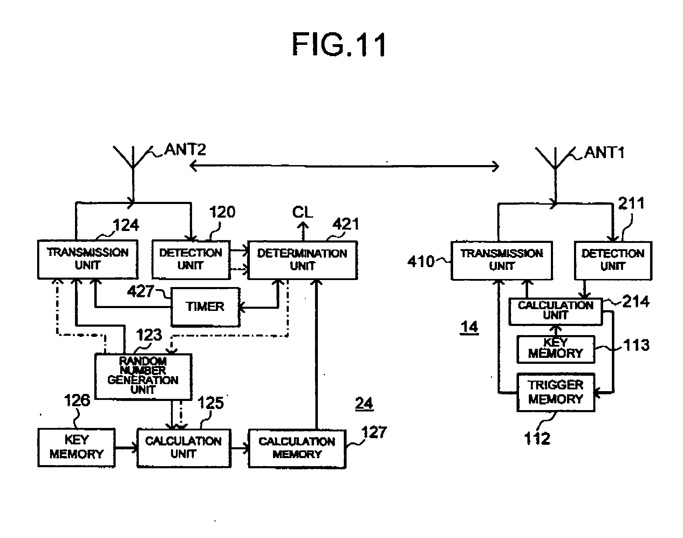

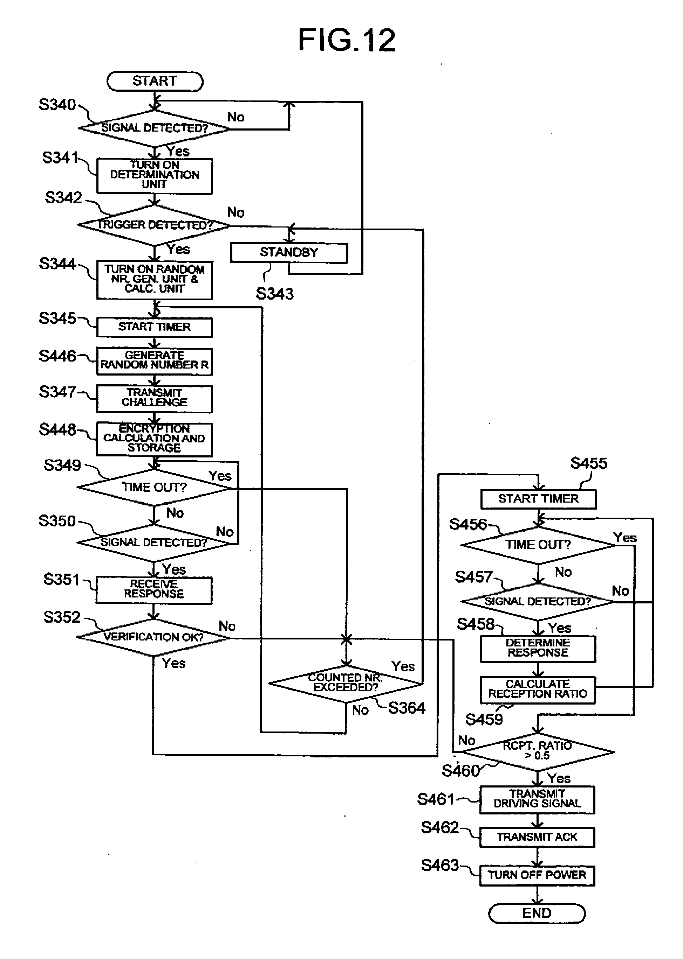

Next, with reference to FIG. 11 and FIG. 12, a control system according to a fourth embodiment of the present invention will be explained in detail. In the following explanation, structures and steps common to the first to third embodiments are given the same reference numerals, and duplicating explanations are omitted. As shown in FIG. 11, the control system of this embodiment is such that a timer 427 is further provided in the control device of the control system of the second embodiment so as to realize timed control.

In the control system of this embodiment, for determining correctness of a response signal sent from the control device, a driving signal is generated not simply by true or false of comparison with the calculated value C stored in the calculation memory but when a ratio of determination to be identical is equal to or larger than a predetermined ratio after performing plural times of comparison. That is, assuming that there can be communication disturbance in a radio line, the control device is structured to retransmit the response signal plural times. The lock driving device calculates about how many response signals match with the calculated value C of its own among response signals which are received plural times, and determines that a correct response signal is emitted from the control device when the calculated value exceeds a predetermined ratio.

A transmission unit 410 in a control device 14 of this embodiment has a function to repeatedly transmit the response signal given by the calculation unit 214 a predetermined number of times. The timer 427 corresponds to the timer 327 according to the third embodiment, but further has a function to give a determination unit 421 a time period in which reception of the response signal should be continued. The determination unit 421 further has a function to repeatedly receive a response signal during a predetermined time given by the timer 427, and calculate the ratio of matching between the calculated value C(Kb, R) of the received response signal and the calculated value C(Ka, R) read from the calculation memory 127.

Hereinafter, with reference to FIG. 11 and FIG. 12, operation of the lock driving device 24 of this embodiment will be explained.

The detection unit 120 is constantly supplied with power to detect a radio wave (No in S340). Upon detection of a radio wave (Yes in S340), the detection unit 120 supplies power to the determination unit 421 to turn it to an on state, and demodulates the received signal and sends it to the determination unit 421 (S341).

The determination unit 421 is activated upon supply of power, and determines whether the signal received from the detection unit 120 matches with an initial value T0 of the trigger signal (or the calculated value C used in the previous sequence) (S342). When they do not match (No in S342), the determination unit 421 ends the processing, and the detection unit 120 turns off the power supply to the determination unit 421 and turns to a standby state (S343). When they match (Yes in S342), the determination unit 421 starts supplying power to the random number generation unit 123, the transmission unit 124, the calculation unit 125 and the timer 427 (S344).

When the power is supplied to the timer 427, the timer 427 starts counting of a predetermined time (S345). The random number generation unit 123 generates a random number R and sends it to the transmission unit 124. The transmission unit 124 performs predetermined modulation on the received random number R and transmits it as the challenge signal to the control device 14 via the antenna ANT2 (S347). On the other hand, the calculation unit 125 reads the key Ka from the key memory 126, performs calculation processing on the random number R based on the key Ka, and stores the obtained calculated value C (Ka, R) in the calculation memory 127 (S448).

Here, when a count value given by the timer 427 is not larger than a value of time limit (No in S349) and a radio wave arrives from the control device 14 (Yes in S350), the detection unit 120 receives the radio wave and sends it to the determination unit 421 (S351). The determination unit 421 compares the received response signal (calculated value C(Kb, R)) with the calculated value C (Ka, R) stored in the calculation memory 127 (S352).

When both the calculated values C match as a result of the comparison (Yes in S352), the determination unit 421 makes the timer 427 start counting of a predetermined time (S455). When the predetermined time has not passed (No in S456) and reception of a response signal continues to succeed (Yes in S457), the determination unit 421 compares the received response signal (calculated value C (Kb, R)) with the calculated value C (Ka, R) stored in the calculation memory 127 (S458), and counts the number of matches to calculate a reception probability (S459). This operation is repeated until a predetermined time has passed (No in S456) or a signal is no longer detected (No in S457).

The timer 427 gives a timing signal to the determination unit 421 when the predetermined time has passed, and the determination unit 421 calculates a final reception probability according to the timing signal (S460). When the reception probability is higher than 0.5 for example, that is, reception of a correct response signal succeeds by a probability higher than 1/2, it is determined to be an instruction from the correct control device 14 (Yes in S460), and the determination unit 421 generates a driving signal CL and sends it to the electrically driven lock (S461). The determination unit 421 may be structured to instruct the transmission unit to transmit an ACK signal after the driving signal CL is generated (S462). When the driving signal CL is transmitted, the determination unit 421 stops supplying power to other elements (S463).

Note that when reception of the response signal is failed within the predetermined time in steps 349, 352, 460 (Yes in B349 and No in S352) or a predetermined reception probability is not obtained (No in S460), the timer 427 counts the number of failures (S364), and when it is less than a predetermined number (No in S364), the determination unit 421 starts over the processing from the transmission of the challenge signal. When reception of the response signal is failed or the predetermined reception probability is not obtained even when the predetermined number is reached (Yes in S364), the timer 427 resets the counted time and the counted number, and the determination unit 421 stops supplying of power and turns to a standby state (S343).

Thus, in the control system of this embodiment, transmission and reception of the response signal are performed plural times, and the driving signal is generated only when succeeding in authentication of the response signal for a predetermined number of times or more (higher than a predetermined probability) within a predetermined time. Therefore, more reliable control can be realized even in an environment where many unwanted radio waves exist.

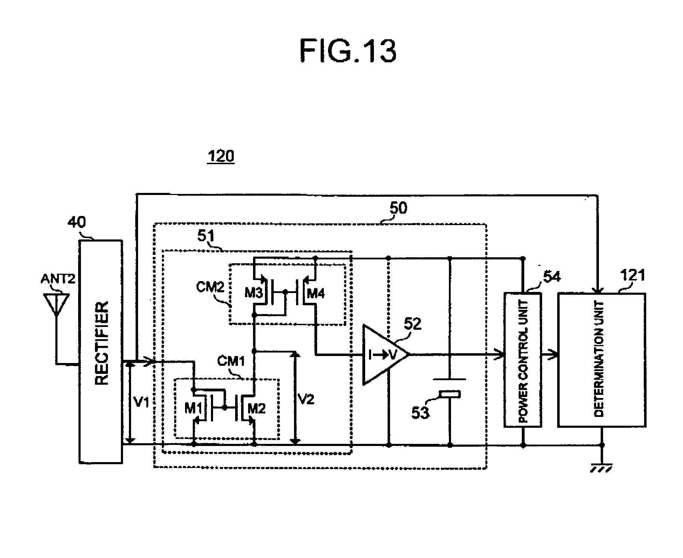

Next, with reference to FIG. 13, an example of the detection unit used in the lock driving devices according to the first to fourth embodiments will be explained. As shown in FIG. 13, the detection unit 120 in these embodiments has a rectifier 40 and an activation circuit 50.

The rectifier 40 rectifies an RF signal outputted by the antenna ANT2 to generate a rectified voltage (direct current voltage). In other words, the antenna ANT2 and the rectifier 40 form a power generation unit that receives energy from the outside to generate electric power. The rectifier 40 is realized by a diode element or the like for example, and does not need to be supplied with power in particular. However, there is a connection from the activation circuit 50 only to a ground thereof for a reference potential. The activation circuit 50 outputs an activation signal for the determination unit 121 (or 221, 321, 421; the same applies below) upon reception of the rectified voltage outputted by the rectifier 40. The activation signal is supplied to a power control unit 54. On the other hand, the rectifier 40 detects the RF voltage received from the antenna ANT2 and gives it to the determination unit 121. That is, the determination unit 121 is activated by the activation signal from the activation circuit 50, and performs determination of a trigger signal or a response signal upon reception of a signal from the rectifier 40.

The activation circuit 50 has a current generation unit and current amplification unit 51, a current-voltage converter 52, and a battery power supply 53. An nMOS transistor M1 corresponds to the current generation unit, and an electric current is generated in the current generation unit when the rectified voltage outputted by the rectifier 40 is applied across a drain-gate common connection side and a source side of the transistor M1 with reference to the ground (reference potential or second reference potential). An nMOS transistor M2 and pMOS transistors M3, M4 correspond to the current amplification unit. The transistor M1 and the transistor M2 forming a current mirror circuit CM1 with the transistor M1 perform current amplification of first stage, and current amplification of second stage is performed by a current mirror circuit CM2 formed by the transistor M3 and the transistor M4.

An amplified current as an output of the current generation unit and current amplification unit 51 is outputted from a drain of the transistor M4 and current-inputted into the current-voltage converter 52. The current-voltage converter 52 generates a voltage that depends on the magnitude of the inputted current. A polarity from the current input to the output voltage can take either of a positive polarity and a negative polarity. In addition, the ground side is shown by a solid line and power supply (second reference potential or reference potential) side is shown by a dashed line on the current-voltage converter 52, which is because there may be the case where the connection on the power supply side is not required. The battery power supply 53 functions as power supply for the activation circuit 50 and also functions as power supply for the power control unit 54 and the determination unit 121.

In the activation circuit 50, basically there will be no power consumption from the battery power supply 53 in a state that there is no input of rectified voltage from the rectifier 40. This is because no electric current flows through the transistor M1 in a state that no rectified voltage is generated, hence no electric current flows through the current mirror circuits CM1, CM2, and moreover, no electric current flows through the current-voltage converter 52 because its state is fixed by, for example, a CMOS circuit or the like. Furthermore, the power consumption in the power control unit 54 is in the same situation as the current-voltage converter 52. This is also because this unit can be formed by a CMOS circuit or the like for example. The determination unit 121 is turned to an on state via the power control unit 54 by the activation signal that is an output of the activation circuit 50, and consumes from the battery power supply 53. The power control unit 54 supplies power to the determination unit 121 based on the activation signal. That is, the power control unit 54 has a function to convert an activation signal into a voltage that can drive the determination unit 121.

In the detection unit of this example, the received signal received in the antenna ANT2 is converted into a direct current by the rectifier 40, and is sent to the activation circuit 50 and the determination unit 121. The activation circuit 50 amplifies the received current by the current mirrors CM1 and CM2, and converts it into a voltage by the current-voltage converter 52. The converted voltage is sent to the power control unit 54 as an activation signal, and the power control unit 54 supplies power to the determination unit 121 based on this activation signal. The determination unit 121 supplied with power performs determination of a received signal received from the rectifier 40.

In this example, a potential difference V1 between the rectifier 21 and the ground is made equal to a potential difference V2 between the current mirror circuit CM1 and the ground, and hence the current does not flow in a state that they are off, which allows to suppress the power consumption in a standby state more effectively. In the detection unit 120 of this embodiment, no power is consumed in a standby state. This point is a great advantage in terms of power saving.

In addition, to be able to maintain an on state of the determination unit 121 even when an incoming radio wave stops and no more activation signal is generated, for example a set-reset flip flop (SR flip-flop) may be provided at the output of the current-voltage converter 52. Such a type of state recording circuit may be provided in the power control circuit 54.

It should be noted that the present invention is not limited to the above embodiments as they are, and the components thereof can be modified and embodied within the range not departing from the spirit of the invention in a stage of implementation. Further, various inventions can be formed by appropriate combinations of plural components disclosed in the above embodiments. For example, some of the components may be deleted from all the components shown in the embodiments. Furthermore, components from different embodiments may be combined appropriately.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A control device communicating with a controlled device to control the controlled device, comprising:
a first memory to store first authentication information for activation of the controlled device;
a second memory to store a key for encryption;
a generator to generate third authentication information by encrypting second authentication information transmitted by the controlled device in response to the first authentication information using the key stored in the second memory;
a transmitter to transmit the first authentication information or the third authentication information to the controlled device; and
a memory controller to store the second authentication information or the third authentication information as first authentication information for next authentication in the first memory.

2. A controlled device to authenticate a control device before performing control instructed by the control device, comprising:
a first memory to store first authentication information for identification of the control device;
a first determination unit to generate random number information when second authentication information transmitted from the control device and the first authentication information stored in the first memory match;
a transmitter to transmit the random number information to the control device;
a second memory to store a key for encryption;
a calculator to generate third authentication information by encrypting the random number information using the key stored in the second memory;
a second determination unit to perform the control when response information sent from the control device and the third authentication information match; and
a memory controller to store the random number information or the third authentication information as first authentication information for next authentication in the first memory.

3. The device according to claim 2,
wherein the first determination unit comprises a detector to detect a radio wave sent from the control device and generate a first power supply voltage, and a random number generator being activated by the first power supply voltage generated by the detector to generate the random number information.

4. The device according to claim 3,
wherein, when the first authentication information and the second authentication information match, the first determination unit generates a second power supply voltage and supplies the second power supply voltage to the calculator, and the calculator is activated upon supply of the second power supply voltage from the first determination unit.

5. A control method for a controlled device to authenticate a control device before performing control instructed by the control device, comprising:
storing a key for encryption in a first memory;
storing first authentication information for identification of the control device in a second memory;
generating random number information at a first determination unit when second authentication information sent from the control device and the first authentication information stored in the second memory match;
transmitting the random number information to the control device;
generating third authentication information at a calculation unit by encrypting the random number information using the key stored in the first memory:
performing the control at a second determination unit when response information sent from the control device and the third authentication information match; and
storing the random number information or the third authentication information as second authentication information for next authentication in the second memory.
